# EUROPÄISCHE PATENTSCHRIFT

(11) **EP 0 735 534 B1**
(45) Veröffentlichungstag und Bekanntmachung des Hinweises auf die Patenterteilung: **02.05.2001**
(21) Anmeldenummer: 96104023.5
(22) Anmeldetag: 14.03.1996
(51) Int. Cl.: G11B 19/02, G11B 19/20, G11B 19/06, G11B 20/18

(54) **Verfahren zum Betreiben eines Rechnerlaufwerkes**
Computer drive operating method
Procédé pour opérer un entraînement d'ordinateur

(30) Priorität: 28.03.1995 DE 19511299
(43) Veröffentlichungstag der Anmeldung: 02.10.1996
(73) Patentinhaber: MAN Roland Druckmaschinen AG, 63075 Offenbach (DE)
(72) Erfinder: Duschl, Dieter, Dr., 63071 Offenbach/Main (DE); Schlitz, Thomas, 63165 Mühlheim/Main (DE)
(74) Vertreter: Stahl, Dietmar

(56) Entgegenhaltungen:
- DE-A- 4 229 266
- GB-A- 2 273 811
- US-A- 4 979 054
- PATENT ABSTRACTS OF JAPAN vol. 017, no. 087 (P-1491), 22.Februar 1993 & JP-A-04 286785 (TOSHIBA CORP), 12.Oktober 1992,
- PATENT ABSTRACTS OF JAPAN vol. 15, no. 266 (P-1223), 5.Juli 1991 & JP-A-03 086965 (TOSHIBA CORP), 11.April 1991,

## Beschreibung

Die Erfindung betrifft ein Verfahren zum Betreiben eines Rechnerlaufwerkes sowie entsprechend ausgebildete Rechner gemäß dem Oberbegriff des Verfahrens- bzw. der Vorrichtungsansprüche.

Der Druckprozeß wird heute zunehmend von einem Leitstand aus gesteuert und überwacht. Von einem Leitstand aus können die verschiedensten Komponenten sowie Stellglieder in ihrem Ist-Zustand überwacht und entsprechend den Prozeßbedürfnissen auch verstellt werden. Über einen Druckmaschinenleitstand erfolgt aber auch die Erfassung, Verwaltung sowie Bearbeitung von Betriebsdaten der Druckaufträge. Als Daten sind hier beispielsweise Auftragsnummer, Kundenname, Auflagenzahl, Termine, Qualitätsdaten usw. zu nennen. Druckmaschinenleitstände, welche Rechner nach Art eines PC aufweisen, sind aus der DE 4 123 126 C1 sowie der DE 4 229 266 A1 bekannt.

Daß der Rechner eines Leitstandes einer Druckmaschine im Aufbau und Art der Datenverarbeitung den PCs im Büro und Entwicklungsbereich entspricht, hat dabei den Vorteil, daß die entsprechenden Programme für die Benutzerführung sowie die darunter angesiedelten Verarbeitungsprogramme auf ganz normalen PCs entwickelt werden können. Auch können diese Programmteile auf normalen Datenträgern (Disketten) abgespeichert und dann im PC des Leitstandes aufgerufen bzw. auf dessen Festplatte kopiert werden. Dies erleichtert den Service bzw. Installationsaufwand. Ein weiterer Vorteil einer derartigen Ausgestaltung des Rechners eines Leitstandes ist die Tatsache, daß auf handelsübliche PCs zurückgegriffen werden kann, also auf PCs, deren Hardware an die rauhe Industrieumgebung angepaßt ist. Teurere und aufwendige Rechnerentwicklungen können unterbleiben.

Nach dem Einschalten des Leitstandrechners erfolgt das Booten des Rechnersystems von bestimmten Bereichen des Festplattenlaufwerkes aus. Danach erfolgt dann das Aufrufen bestimmter Daten, wobei oftmals auf Daten von sogenannten Wiederholaufträgen zugegriffen wird. Während des eigentlichen Druckbetriebes werden in der Regel nur selten Schreib- bzw. Lesevorgänge mit der Festplatte durchgeführt, so daß der Schreib-/Lesekopf des Festplattenlaufwerkes über unter Umständen sehr lange Zeiträume in einem ganz bestimmten Zylinderbereich des Laufwerkes positioniert bleibt. Gerade in der rauhen Umgebung eines Druckmaschinenbetriebes ist es aber nicht auszuschließen, daß der Schreib- /Lesekopf des Laufwerkes eine Berührung mit der Festplattenoberfläche erfährt, es also zu sogenannten Head-Crashs kommt. Da der Schreib- und Lesekopf des Laufwerkes über längere Zeiträume im gleichen Plattenbereich verbleibt, ist die Wahrscheinlichkeit groß, daß in diesem Bereich bzw. Zylinder eine Häufung von Crashs auftritt, was zu Datenverlusten führt, die auch durch aufwendigste Servicemaßnahmen nicht mehr wiederhergestellt werden können.

Aus der DE 4 229 266 A1 ist es bekannt, einen Druckmaschinenleitstand mit zwei Festplattenlaufwerken auszustatten, wobei im störungsfreien Normalbetrieb stets mit einem Laufwerk gearbeitet wird und beispielsweise von Zeit zu Zeit, ausgelöst durch den Benutzer, ein Daten-Back-Up auf das zweite Festplattenlaufwerk durchgeführt wird. Die Sicherheit für den Schutz gegen Datenverlust durch die oben genannten druckmaschinentypischen Ursachen hängt aber bei einem derartigen System von der Häufigkeit eines durchgeführten Back-Ups ab. Trotzdem kann es aber auch hier aufgrund der relativ langen Verweilzeit des Schreib- und Lesekopfes der Laufwerke zu den gleichen Ausfallerscheinungen kommen.

Aus der GB-A-2 273 811 ist es bekannt, Laufwerke mit einer Parkfunktion auszustatten. Der Kopf wird beim Abschalten des Laufwerkes in einen unbenutzten Bereich gezogen.

Die US-A-4 979 054 beschreibt ein Laufwerk mit für Lese- und/oder Schreibvorgänge gesperrten bzw. reservierten Bereichen.

Das An- und Abschalten eines Laufwerkes zur Vermeidung von Berührungen zwischen Kopf und Laufwerk beschreibt die JP-03 086965.

Letztlich beschreibt die JP-04 286785 ein Festplattenlaufwerk, bei welchen zu Lese- und Schreibzwecken der Kopf auf bestimmte Bereiche positioniert wird und in Zeiten ohne Zugriff der Kopf über Bereiche der Festplatte bewegt wird. Die unabhängigen Ansprüche wurden gegen dieses Dokument abgegrenzt.

Aufgabe der vorliegenden Erfindung ist es daher, ein Verfahren sowie einen entsprechend diesem Verfahren arbeitenden Rechner gemäß dem Oberbegriff des Verfahrens- bzw. der Vorrichtungsansprüche derartig weiterzubilden, so daß Beschädigungen des Festplattenlaufwerkes in bestimmten Bereichen erkannt werden können.

Gelöst wird diese Aufgabe durch die Merkmale des Anspruchs 1. Weiterbildungen der Erfindung ergeben sich aus den jeweiligen Unteransprüchen.

Gemäß der Erfindung ist als Verfahren vorgesehen, dass über den Schreib- und Lesekopf des Festplattenlaufwerkes während der zugriffsfreien Zeit durch Einschreiben und Auslesen von Informationen in dem Bereich, in welchen der Schreib- und Lesekopf positioniert wurde, eine Überwachung hinsichtlich durch Plattenberührung verursachter Schäden erfolgt.

Dadurch wird vermieden, dass der Schreib- und Lesekopf des Festplattenlaufwerkes während längerer zugriffsfreier Zeiträume in ein und demselben Bereich verbleibt und dass sich Platten-Crashs in einem Bereich häufen und somit zu nachhaltigem und irreparablem Datenverlust führen. Da während längerer zugriffsfreier Zeiträume durch die rauhe Druckmaschinenumgebung Berührungen des Schreib- und Lesekopfes mit der Festplattenoberfläche nicht auszuschließen sind, verteilen sich diese durch Anwendung des erfindungsgemäßen Verfahrens über mehrere Spuren bzw. Zylinder des Laufwerkes und konzentrieren sich nicht in einem Zylinder. Durch das Einschreiben und Auslesen von Informationen in den zugriffsfreien Zeiten erfolgt weiterhin eine Überwachung der Festplatte auf durch Plattenberührungen verursachte Beschädigungen.

Die erfindungsgemäßen Rechner kennzeichnen sich dadurch, dass in einem flüchtigen Speicher des Rechners eine Programmroutine abgelegt ist, durch welche über den Schreib- und Lesekopf des Festplattenlaufwerkes während der zugriffsfreien Zeit durch Einschreiben und Auslesen von Informationen im Bereich, in welchem der Schreib- und Lesekopf positioniert ist, eine Überwachung hinsichtlich durch Plattenberührung verursachter Schäden durchführbar ist. Auch ist möglich, dass die Programmroutine im ROM des Rechners (BIOS) abgelegt ist bzw. dass die Überwachung durch einen Hardwareinterrupt ausgelöst wird.

Des weiteren erfolgt die Erläuterung von bevorzugten Ausführungsbeispielen der Erfindung. Es findet hierbei ein Leitstand-PC einer Druckmaschine Verwendung, so daß auf die Erläuterung von aus dem Stand der Technik bekannten Verfahrens- und Hardware-Komponenten verzichtet werden kann.

Gemäß einer Ausführungsform der Erfindung ist vorgesehen, daß der Schreib- und Lesekopf in Verbindung mit dem ihn steuernden Controller sowie dem nachgeschalteten Rechner während der zugriffsfreien Zeiträume in denjenigen Bereich bzw. Zylinder, in welchem er erfindungsgemäß immer wieder neu positioniert wird, Prüf- bzw. Checkvorgänge vornimmt. Es ist hierbei möglich, daß für kurze Zeitintervalle immer wieder Schreib-Lesevorgänge durchgeführt werden und durch diese Lesevorgänge geprüft wird, ob es zu Datenverlusten aufgrund von Platten-Crashs gekommen ist. Ist erfindungsgemäß vorgesehen, den Schreib- /Lesekopf während der zugriffsfreien Zeiträume auf immer wieder ein und denselben Bereich bzw. Zylinder zu positionieren, so werden hier ebenfalls Prüfprogramme aufgrund von Schreib- und Lesevorgängen durchgeführt. Auch diese Prüf-Zyklen laufen dabei für vorbestimmte, kurze Zeitintervalle ab.

Wurden durch die zuvor beschriebenen Lesevorgänge in bestimmten Bereichen bzw. Zylindern physikalische Defekte festgestellt, so kann weiterbildend vorgesehen sein, die entsprechenden Cluster aus der File Allocation Table auszutragen, also für weitere Zugriffe zu sperren. Um zu vermeiden, daß durch dieses Sperren größere Datenmengen nicht mehr zur Verfügung stehen, kann ferner vorgesehen sein, die fehlerfreien Sektoren in einen freien Cluster zu kopieren, auf diese Art und Weise also wieder zur Verfügung zu stellen. Nicht kopiert werden lediglich der oder die Sektoren mit festgestelltem physikalischen Defekt.

In einem Rechner, welcher multitaskingfähig ist, ist das voranstehend erwähnte Lesen- und/oder Neuschreiben von Daten zwecks eines Platten-Checks in der Weise möglich, daß dieses Programm die geringste Prioritätsstufe erhält. Dadurch ergibt sich keinerlei Einschränkung bei der Ausführung der übrigen, mit höheren Prioritätsstufen versehenen Programme.

Die Steuerung des erfindungsgemäßen Positionierens des Schreib- und Lesekopfes des Plattenlaufwerkes kann auch über bestimmte Programmteile des Anwendungsprogrammes selbst erfolgen. Insbesondere kann vorgesehen sein, daß über bestimmte Programmroutinen die Zeit erfaßt wird, welche zum letzten Positioniervorgang verstrichen ist und mit einem vorgegebenen Zeitintervall verglichen wird. Dadurch ist es möglich, den Schreib- und Lesekopf des Festplattenlaufwerkes an zugriffsfreien Zeiten an immer wieder neuen Bereichen bzw. Zylindern des Laufwerkes zu positionieren. In einem Multitask-Betrieb können diese Programmteile ebenfalls mit einer geringen Prioritätsstufe ausgestattet sein.

Eine weitere Möglichkeit zur Durchführung des erfindungsgemäßen Verfahrens ergibt sich dabei durch eine BIOS-Änderung des Rechners. Diese kann in einfachster Weise darin bestehen, daß nach einem durch das Anwenderprogramm ausgelösten Schreib- und/oder Lesevorgang der Schreib- und Lesekopf des Festplattenlaufwerkes auf einen vorbestimmten Bereich bzw. Zylinder positioniert wird. Es können aber auch BIOS-Routinen vorgesehen sein, welche das voranstehend erläuterte zeitweise Neupositionieren des Schreib- und Lesekopfes bewirken. Über die BIOS-Routinen kann dabei ferner festgelegt sein, daß der Schreib- und Lesekopf des Plattenlaufwerkes nur in vorbestimmten Bereichen bzw. Zylindern positioniert wird, also vorgegebene Bereiche bzw. Zylinder für das erfindungsgemäß vorgesehene Park-Positionieren gesperrt sind.

Erfindungsgemäß kann vorgesehen sein, daß der Rechner einen HardwareInterrupt aufweist, durch welchen der Schreib- und Lesekopf des Laufwerkes innerhalb der zugriffsfreien Zeit auf vorbestimmte Bereiche bzw. Zylinder positionierbar ist.

## Patentansprüche

1. Verfahren zum Betreiben des Festplattenlaufwerkes eines Leitstandrechners einer Druckmaschine, bei welchem zu Lese- und Schreibzwecken der Lese- und Schreibkopf des Festplattenlaufwerkes auf bestimmte Bereiche der Festplatte positioniert wird, und bei welchem in Zeiten, in denen kein Zugriff auf das Festplattenlaufwerk erfolgt, der Schreib- und Lesekopf auf vorbestimmte Bereiche positioniert wird,
**dadurch gekennzeichnet,**
dass über den Schreib- und Lesekopf des Festplattenlaufwerkes während der zugriffsfreien Zeit durch Einschreiben und Auslesen von Informationen in dem Bereich, in welchem der Schreib- und Lesekopf positioniert wurde, eine Überwachung hinsichtlich durch Plattenberührung verursachter Schäden erfolgt.

2. Verfahren nach Anspruch 1,
**dadurch gekennzeichnet,**
dass als beschädigt festgestellte Sektoren bzw. Cluster gegen weitere Schreib- und Lesevorgänge gesperrt werden.

3. Verfahren nach Anspruch 2,
**dadurch gekennzeichnet,**
dass intakte Datenteile in den als beschädigt festgestellten Sektoren bzw. Cluster in freie Sektoren bzw. Cluster umkopiert werden.

## Claims

1. Process for operating the hard disk drive of a control desk computer of a printing press, in which, for reading and writing purposes, the read and write head of the hard disk drive is positioned over given regions of the hard disk, and in which, from time to time, during which no access to the hard disk drive takes place, the write and read head is positioned at predetermined regions, characterised in that via the write and read head of the hard disk drive during the access-free time by writing and reading out information in the region in which the write and read head is positioned, monitoring takes place with reference to damage generated by disk contact.

2. Process according to Claim 1, characterised in that sectors or clusters detected as damaged are locked against further writing and reading processes.

3. Process according to Claim 2, characterised in that intact data portions in the sectors or clusters determined as damaged are copied over into free sectors or clusters.

## Revendications

1. Procédé pour le fonctionnement d'une unité de disque dur d'un calculateur de poste de contrôle d'une machine d'impression, dans lequel, dans des buts de lecture et d'écriture, la tête de lecture et d'écriture de l'unité de disque dur est positionnée sur des zones déterminées du disque dur, et dans lequel, aux moments auxquels il n'est effectué aucun accès à l'unité de disque dur, la tête de lecture et d'écriture est positionnée sur des zones prédéterminées,
caractérisé en ce que, par la tête de lecture et d'écriture de l'unité de disque dur, pendant le temps sans accès, par écriture et lecture d'informations dans la zone dans laquelle la tête de lecture et d'écriture a été positionnée, il est effectué une surveillance relativement à des endommagements provoqués par contact du disque.

2. Procédé selon la revendication 1,
caractérisé en ce que des secteurs ou unités d'allocation déterminés comme endommagés sont bloqués vis-à-vis d'autres processus de lecture et d'écriture.

3. Procédé selon la revendication 2,
caractérisé en ce que les données intactes dans les secteurs ou unités d'allocation déterminés comme endommagés sont copiées dans des secteurs ou unités d'allocation libres.
